# FASCICULE DE BREVET EUROPEEN

(11) **EP 2 446 628 B1**
(45) Date de publication et mention de la délivrance du brevet: **15.08.2018**
(21) Numéro de dépôt: 10734259.4
(22) Date de dépôt: 17.06.2010
(51) Int. Cl.: H04N 19/52, H04N 19/139, H04N 19/17, H04N 19/543

(54) **PROCÉDÉ DE DÉCODAGE D'IMAGES, DISPOSITIFS DE DÉCODAGE ET PROGRAMME D'ORDINATEUR CORRESPONDANTS**
VERFAHREN ZUR DEKODIERUNG VON BILDERN, DEKODIERVORRICHTUNGEN SOWIE ENTSPRECHENDER COMPUTERPROGRAMM
METHOD FOR DECODING IMAGES, DECODING DEVICES, AND CORRESPONDING COMPUTER PROGRAM

(30) Priorité: 23.06.2009 FR 0954289
(43) Date de publication de la demande: 02.05.2012
(73) Titulaire: Orange, 75015 Paris (FR)
(72) Inventeur: CAMMAS, Nathalie, F-35490 Sens de Bretagne (FR); AMONOU, Isabelle, 35510 Cesson Sevige (FR); PATEUX, Stéphane, F-35700 Rennes (FR)
(74) Mandataire: Vidon Brevets & Stratégie
(86) Numéro de dépôt international: PCT/FR2010/051213
(87) Numéro de publication internationale: WO 2010/149900

(56) Documents cités:
- US-B1- 6 212 235
- INJONG RHEE ET AL: "Quadtree-Structured Variable-Size Block-Matching Motion Estimation with Minimal Error" IEEE TRANSACTIONS ON CIRCUITS AND SYSTEMS FOR VIDEO TECHNOLOGY, IEEE SERVICE CENTER, PISCATAWAY, NJ, US, vol. 9, no. 1, 1 février 2000 (2000-02-01) , XP011014015 ISSN: 1051-8215
- KATO S ET AL: "Performance evaluation on H.26L-based motion compensation with segmented multiple reference frames" PROCEEDINGS 2002 INTERNATIONAL CONFERENCE ON IMAGE PROCESSING (CAT. NO.02CH37396) IEEE PISCATAWAY, NJ, USA, vol. 1, 2002, pages I-661, XP002563364 ISBN: 0-7803-7622-6
- TOURAPIS: "Direct Prediction in P and B frames" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-C128, 10 mai 2002 (2002-05-10), XP030005240

## Description

### 1. Domaine de l'invention

Le domaine de l'invention est celui du codage et du décodage d'images, et notamment de flux vidéo, comprenant une série d'images successives. Plus précisément, l'invention s'applique à la compression d'images ou de séquence d'images utilisant une représentation par blocs des images.

L'invention peut notamment, mais non exclusivement, s'appliquer au codage vidéo mis en oeuvre dans les codeurs vidéo actuels et de leurs amendements (MPEG, H.264, H.264 SVC, H.264 MVC, etc) ou à venir (ITU-T/VCEG (H.265) ou ISO/MPEG (HVC), et au décodage correspondant.

### 2. Art antérieur

Les images et séquences d'images numériques occupent beaucoup d'espace en termes de mémoire, ce qui nécessite, lorsque l'on transmet ces images, de les compresser afin d'éviter les problèmes d'encombrements sur le réseau de communication utilisé pour cette transmission. En effet, le débit utilisable sur ce réseau est généralement limité.

On connaît déjà de nombreuses techniques de compression de données vidéo. Parmi celles-ci, de nombreuses techniques de codages vidéo, notamment la technique H.264, utilisent des techniques de prédiction de pixels d'une image courante par rapport à d'autres pixels appartenant à la même image (prédiction intra) ou à une image précédente ou suivante (prédiction inter).

Plus précisément, selon cette technique H.264, des images I sont codées par prédiction spatiale (prédiction intra), et des images P et B sont codées par prédiction temporelle par rapport à d'autres images I, P ou B (prédiction inter), codées/décodées à l'aide d'une compensation en mouvement par exemple.

Pour ce faire, les images sont découpées en macroblocs, qui sont ensuite subdivisés en blocs. Un bloc est constitué d'un ensemble de pixels. Les informations de codage sont alors transmises pour chaque bloc.

Classiquement, le codage d'un bloc est réalisé à l'aide d'une prédiction du bloc et d'un codage d'un résidu de prédiction à ajouter à la prédiction. La prédiction est établie à l'aide d'informations déjà reconstruites (blocs précédents déjà codés/décodés dans l'image courante, images préalablement codées dans le cadre d'un codage vidéo, etc).

Après ce codage prédictif, les blocs de pixels sont transformés par une transformée de type transformée en cosinus discrète, puis quantifiés. Les coefficients des blocs de pixels quantifiés sont ensuite parcourus dans un ordre de lecture permettant d'exploiter le nombre important de coefficients nuls dans les hautes fréquences, puis codés par un codage entropique.

Selon la technique H.264 par exemple, pour chaque bloc est codé :
- le type de codage (prédiction intra, prédiction inter, prédiction par défaut réalisant une prédiction pour laquelle aucune information n'est transmise au décodeur (« en anglais « skip »)) ;
- le type de partitionnement ;
- les informations concernant la prédiction (orientation, image de référence, ...) ;
- les informations de mouvement si nécessaire ;
- les coefficients codés, correspondants au résidu transformé, après quantification et codage entropique ;
- etc.

Le décodage est fait image par image, et pour chaque image, macrobloc par macrobloc. Pour chaque macrobloc, les éléments correspondants du flux sont lus. La quantification inverse et la transformation inverse des coefficients des blocs du macrobloc sont effectuées. Puis, la prédiction du macrobloc est calculée et le macrobloc est reconstruit en ajoutant la prédiction au résidu de prédiction décodé.

Ces techniques de codage compressif sont efficaces, mais ne sont pas optimales pour compresser des images comprenant des régions présentant des caractéristiques similaires, comme une texture homogène.

En particulier, dans la norme H.264/MPEG-4 AVC, la prédiction spatiale d'un bloc dans une image par rapport à un autre bloc dans cette même image n'est possible que si cet autre bloc est un bloc voisin du bloc à prédire et se trouvant dans certaines directions prédéterminées par rapport à celui-ci, c'est-à-dire généralement au-dessus et à gauche, dans un voisinage dit "causal". De même, la prédiction des vecteurs de mouvement d'un bloc d'une image est une prédiction causale par rapport aux vecteurs de mouvement de blocs voisins.

Ce type de prédiction ne permet donc pas d'exploiter la similarité de texture de blocs de régions de même texture disjointes, ou de blocs éloignés se trouvant dans une région de même texture. Autrement dit ce type de technique ne permet pas d'adresser simultanément des blocs possédant des caractéristiques communes en tant qu'entité unique. De plus le mouvement de régions de texture homogènes d'une image à une autre n'est pas non plus exploité de façon optimale : en effet la prédiction temporelle de la norme H.264/MPEG-4 AVC permet d'exploiter le mouvement d'un bloc d'une image à une autre, mais pas l'appartenance de ce bloc à une région possédant un mouvement homogène.

Certaines techniques dites de codage par régions ont proposé, pour résoudre ce problème, de segmenter les images d'une séquence vidéo de manière à isoler des régions de texture ou de mouvement homogènes dans ces images préalablement à leur codage. Ces régions définissent des objets dans ces images, sur lesquels on choisit par exemple d'utiliser un codage plus fin ou au contraire plus grossier.

Cependant ces techniques de codage par régions nécessitent de transmettre, au décodeur destinataire de la séquence vidéo, une carte de segmentation calculée par image au niveau du codeur qui émet cette séquence vidéo. Cette carte de segmentation est très coûteuse en termes de place mémoire car les frontières de cette carte de segmentation ne correspondent généralement pas aux frontières des blocs de pixels des images segmentées. De plus la segmentation d'une séquence vidéo en régions de formes arbitraires n'est pas déterministe : les frontières de la carte de segmentation ne correspondent généralement pas aux frontières des objets réels que cette carte tente de découper dans les images de la séquence vidéo. De ce fait, seule la représentation de telles cartes de segmentation et leur transmission a été normalisée (norme MPEG-4 partie 2), et non leur production. Le document INJONG RHEE ET AL: "Quadtree-Structured Variable-Size Block-Matching Motion Estimation with Minimal Error"IEEE TRANSACTIONS ON CIRCUITS AND SYSTEMS FOR VIDEO TECHNOLOGY, IEEE SERVICE CENTER, PISCATAWAY, NJ, US, vol. 9, no. 1, 1 février 2000 (2000-02-01) propose une technique de compression vidéo utilisant blocs de taille variable. La demande de brevet internationale n°PCT/FR2009/050278 déposée le 20 février 2009 au nom du même Demandeur propose une technique de compression vidéo utilisant des « grappes de blocs », permettant de résoudre certains de ces inconvénients. Plus précisément, selon cette technique, certains macroblocs de la séquence d'image sont regroupés en grappe quand ils partagent une information commune, par exemple une information de mouvement. L'information commune est alors codée une seule fois pour l'ensemble des macroblocs de la grappe, et, au décodage, les macroblocs appartenant à la grappe héritent de l'information de mouvement de la grappe décodée. Cette technique permet un gain de compression en évitant le codage d'information redondante.

Cependant, selon cette technique, la signalisation des grappes dans le flux peut s'avérer coûteuse en termes de débit.

En effet, les grappes peuvent contenir n'importe quels macroblocs d'une image ou d'un groupe d'images.

De plus, certains blocs ou sous-blocs d'un macrobloc pouvant être exclus d'une grappe, il est nécessaire de signaler pour chaque macrobloc si certains de ses blocs ou sous-blocs sont exclus.

Il existe donc un besoin pour une nouvelle technique de codage/décodage d'images permettant de résoudre au moins certains inconvénients de l'art antérieur, et permettant d'optimiser la signalisation du flux de données, et donc le débit de transmission.

### 3. Exposé de l'invention

L'invention concerne un procédé de décodage, un dispositif de décodage et un programme d'ordinateur tel que définis dans les revendications. Un procédé de codage est décrit mettant en oeuvre les étapes suivantes, pour au moins un groupe d'une image de la séquence :
- détermination, pour chacun des blocs du groupe, d'au moins un paramètre caractéristique du bloc ;
- formation d'au moins une grappe comprenant les blocs présentant au moins un paramètre caractéristique similaire, en fonction du résultat de l'étape de détermination ;
- codage des blocs de la ou des grappes, délivrant pour chaque grappe des informations de codage de grappe, le ou les paramètres caractéristiques similaires associés à chacun des blocs d'une grappe étant codé(s) une seule fois pour la grappe ;
- codage des blocs du groupe n'appartenant à aucune grappe, dits blocs extérieurs, délivrant pour chaque bloc extérieur des informations de codage de bloc extérieur, le ou les paramètres caractéristiques associés à chacun des blocs extérieurs n'étant pas codé(s) ;

Un tel procédé met également en oeuvre les étapes suivantes :
- génération d'un flux de données représentatif de la séquence, comprenant les informations de codage de grappe et les informations de codage de bloc(s) extérieur(s), et
- insertion, dans le flux de données, d'au moins une information de partitionnement du ou des groupes, permettant d'identifier au sein d'un groupe le ou les blocs extérieurs.

Ainsi, une technique est décrite selon laquelle des données spécifiques à différents blocs, telles que des données de texture, de couleur, ou encore de prédiction de mouvement, sont mutualisées entre blocs ayant une texture, une couleur, ou encore un vecteur mouvement de prédiction similaires. En d'autres termes, si la différence entre deux paramètres caractéristiques de même type, par exemple entre deux vecteurs mouvement, est inférieure à un seuil prédéterminé, ces deux paramètres caractéristiques sont considérés comme similaires. Ainsi, on mutualise ainsi des données spécifiques aux blocs d'un groupe appartenant à des zones présentant des caractéristiques similaires, comme une texture, une couleur ou un mouvement homogène, de manière très flexible par rapport aux techniques de l'art antérieur.

En effet, le regroupement de blocs d'un groupe ayant des caractéristiques similaires, comme une texture homogène, au sein d'une même grappe, permet d'inclure dans cette grappe des blocs d'un même groupe qui sont éloignés les uns des autres, c'est-à-dire qui ne sont pas voisins (pas en contact « direct »).

L'invention permet d'optimiser la quantité d'informations transmises, et donc le débit de transmission.

En effet, l'invention ne nécessite pas la transmission de carte de segmentation au décodeur destinataire de l'image ou des images codées.

L'invention permet aussi de minimiser le coût de la signalisation des grappes, par rapport à la technique décrite dans la demande de brevet internationale n°PCT/FR2009/050278 précitée

En particulier, le fait de construire des grappes au sein de blocs de pixels regroupé en groupes de taille standard, permet de régulariser les intervalles de formation de grappe, une ou plusieurs grappes pouvant être formées au sein d'un même groupe. Par exemple, selon un mode de réalisation préférentiel de l'invention, un groupe de taille standard est un groupe de taille carrée comprenant huit blocs de pixels par colonne et huit blocs de pixels par ligne. Ainsi, on peut considérer qu'une grappe sera toujours construite au sein d'un groupe de 8x8 blocs de pixels.

Ces groupes peuvent être formés spatialement au sein d'une image ou temporellement dans la séquence d'images.

De plus, selon l'invention, une information de partitionnement est insérée dans le flux de données, permettant d'identifier au sein d'un groupe le ou les blocs extérieurs qui n'appartiennent à aucune grappe.

Cette information de partitionnement permet d'établir une « frontière » dans un groupe de blocs, séparant les blocs affectés à une grappe des blocs extérieurs n'ayant pas de paramètre caractéristique similaire avec les blocs de la grappe. Par ailleurs, si un groupe comporte plusieurs grappes, la « frontière » s'adapte aux contours des grappes, par exemple une ligne brisée, permettant de séparer les blocs extérieurs, des blocs appartenant à une grappe.

En outre, il est possible qu'un même bloc appartiennent à deux grappes distinctes, l'une étant construite par exemple à partir d'un paramètre caractéristique de type vecteur mouvement et l'autre à partir d'un paramètre caractéristique de type résidu de prédiction.

De cette façon, il est possible de ne transmettre qu'une information de partitionnement par groupe pour signaler les blocs extérieurs aux grappes au sein d'un groupe, alors que selon l'art antérieur décrit dans la demande de brevet internationale n°PCT/FR2009/050278 précitée, il est nécessaire de signaler pour chaque macrobloc si certains de ses blocs ou sous-blocs sont exclus.

Finalement, le paramètre caractéristique similaire justifiant la construction d'une grappe n'est pas codé pour les blocs extérieurs, ce qui représente un gain en termes de signalisation non négligeable.

Selon un mode de réalisation particulier de l'invention, les blocs extérieurs d'un groupe forment au moins une ligne et/ou au moins une colonne du groupe.

On exclut de cette façon tous les blocs d'une même ligne ou d'une même colonne.

Le procédé de codage permet ainsi de limiter le coût de signalisation et/ou de codage, et/ou d'améliorer la vitesse de traitement, du fait qu'au sein d'un groupe, si un bloc est extérieur, alors la ligne et/ou la colonne auquel appartient le bloc extérieur sera également extérieure.

Selon un mode de réalisation particulier, l'information de partitionnement d'un groupe est représentative soit :
- d'un partitionnement vertical du groupe, défini à partir d'un décalage vertical, en nombre de pixels ou de blocs par rapport au premier pixel ou bloc du groupe selon un ordre de parcours prédéterminé ;
- d'un partitionnement horizontal du groupe, défini à partir d'un décalage horizontal, en nombre de pixels ou de blocs par rapport au premier pixel ou bloc du groupe selon un ordre de parcours prédéterminé ;
- d'un partitionnement diagonal du groupe, défini à partir d'un décalage vertical et/ou horizontal, en nombre de pixels ou de blocs par rapport au premier pixel ou bloc du groupe selon un ordre de parcours prédéterminé, et d'un angle d'inclinaison par rapport à un axe vertical ou horizontal du groupe.

Ainsi le procédé de codage selon l'invention permet de définir une « frontière » au sein d'un groupe, séparant les blocs extérieurs des blocs du groupe appartenant à au moins une grappe. Cette « frontière » peut être verticale (les blocs extérieurs d'un groupe forment alors au moins une colonne), horizontale (les blocs extérieurs d'un groupe forment alors au moins une ligne) ou diagonale au sein du groupe, suivant la nature du décalage dont l'information de partitionnement est représentative.

Par exemple, dans un mode de réalisation mettant en oeuvre une « frontière diagonale », les blocs ayant un paramètre caractéristique similaire appartiennent à une même grappe dont la frontière forme une ligne brisée, ou encore un « escalier », au sein du groupe. L'information de partitionnement correspondante à cette ligne brisée sera codée sous la forme d'une ligne droite diagonale traversant les blocs formant « les marches d'escalier ».

Au décodage, le décodeur pourra décoder, par exemple pour un groupe contenant une unique grappe, l'information de partitionnement représentative de la frontière diagonale et considérera qu'un bloc traversé par la ligne droite diagonale appartient à la grappe si ce bloc présente une majorité de pixels situés du côté de la grappe par rapport à la ligne droite diagonale, ou est un bloc extérieur si ce bloc présente une majorité de pixels situés de l'autre côté de la grappe par rapport à la ligne droite diagonale.

Selon un autre exemple mettant en oeuvre une « frontière diagonale », le premier et le dernier bloc de la diagonale peuvent être des blocs extérieurs n'appartenant à aucune grappe. Cette option permet d'augmenter le gain en signalisation, en formant au moins une colonne et/ou une ligne entière de blocs extérieurs dans le groupe. Une telle règle de partitionnement sera connue du décodeur.

Selon un aspect particulier de l'invention, le paramètre caractéristique appartient au groupe comprenant :
- une valeur de type de codage de prédiction, par exemple intra, prédication inter, prédiction par défaut de l'anglais « skip » ;
- une valeur de vecteur mouvement ;
- une valeur de résidu de prédiction nulle, en d'autres termes de prédiction « parfaite »
- une valeur de type de transformation (transformation effectuée sur des blocs de 4x4 pixels, 8x8 pixels, 16x16 pixels, etc, transformation orientée, ...) ;
- une valeur de coefficient de compensation d'illumination (coefficients appliqués à la prédiction provenant de la compensation en mouvement du type *a***P*+*b,* avec *a* un coefficient de pondération, *b* un coefficient de décalage et *P* la valeur de la prédiction) ;
- une valeur de coefficient de pondération de différentes prédictions ;
- etc.

Il est possible de cette façon de mutualiser et de réduire le coût de signalisation, de manière très flexible par rapport aux techniques de l'art antérieur.

La valeur du paramètre caractéristique associé à un bloc d'une grappe peut par exemple correspondre à une valeur de vecteur mouvement entre un bloc de la grappe d'une image courante et un bloc d'une image de référence.

De plus, le procédé de codage détermine éventuellement lorsqu'une grappe le permet, plusieurs paramètres caractéristiques similaires pour l'ensemble des blocs constituant la grappe. Dans ce cas, on code cette pluralité de paramètres pour la grappe.

Par exemple, si deux blocs d'un même groupe présentent une valeur de direction de prédiction similaire, et une valeur de vecteur mouvement similaire, alors la grappe formée par ces deux blocs comprend des blocs présentant deux paramètres caractéristiques similaires. Selon un autre exemple, une grappe regroupe des blocs ayant les mêmes paramètres de mouvement, à savoir le ou les vecteurs mouvement, les indices des images utilisées pour la compensation en mouvement dans la liste des images, la direction de prédiction du vecteur de mouvement, le résidu de prédiction du vecteur de mouvement. Dans le cas particulier où le mode de prédiction désigne deux vecteurs mouvements, les blocs de la grappe peuvent également avoir en commun des coefficients de pondération de ces vecteurs.

On note que la valeur du paramètre caractéristique associée à une grappe peut correspondre à la valeur d'un paramètre caractéristique associé à un bloc de la grappe.

Selon un autre exemple, la valeur du paramètre caractéristique associé à une grappe peut correspondre à une valeur médiane des paramètres caractéristiques similaires associés à chaque bloc de la grappe, ou encore une valeur arrondie d'un paramètre caractéristique d'un bloc de la grappe. Par exemple, si plusieurs blocs d'un groupe présentent des vecteurs mouvement similaires, présentant une distance inférieure à un seuil prédéterminé (par exemple 0,0005), ces blocs peuvent être regroupés dans une même grappe, et la valeur du paramètre caractéristique associée à la grappe peut correspondre à la moyenne des valeurs des vecteurs mouvement de chaque bloc de la grappe. L'invention concerne un procédé de décodage d'un flux de données représentatif d'une séquence d'au moins une image, une image étant formée de blocs de pixels regroupés en groupes de taille standard.

Selon l'invention, un tel procédé de décodage met en oeuvre les étapes suivantes, pour au moins un groupe de blocs codés dans le flux de données :
- extraction d'au moins une information de partitionnement du groupe, présente dans le flux de données, permettant d'identifier au sein du groupe des blocs dits extérieurs, un bloc extérieur n'appartenant à aucune grappe du groupe, une grappe étant formée de blocs du groupe présentant au moins un paramètre caractéristique similaire ;
- décodage des blocs d'au moins une grappe du groupe à partir d'informations de codage de grappe présentes dans le flux de données, comprenant :
   - une étape de décodage d'un bloc de la grappe mettant en oeuvre un décodage du ou des paramètres caractéristiques codé(s) une seule fois pour la grappe ;
   - une étape de décodage des autres blocs de la grappe tenant compte du ou des paramètres caractéristiques précédemment décodé(s) ;
- décodage des blocs extérieurs à partir d'informations de codage de bloc extérieur présentes dans le flux de données, tenant compte d'au moins un paramètre caractéristique des blocs voisins précédemment décodés.

De cette façon, la technique de décodage selon l'invention permet, à réception et lecture d'informations de codage et de partitionnement, de décoder les différents groupes, et reconstruire la séquence d'images.

Comme déjà indiqué en relation avec le codage, les informations de partitionnement associées à un groupe permettent notamment de déterminer la « frontière » séparant les blocs de la ou des grappe(s) des blocs extérieurs, au sein d'un même groupe.

Par ailleurs, selon l'invention, le paramètre caractéristique associé à chacun des blocs extérieurs est déterminé en fonction de celui des blocs voisins précédemment décodés. En d'autres termes ce paramètre va être obtenu par héritage des blocs voisins précédemment décodés. On comprend alors que ce mécanisme d'héritage forme de nouvelles grappes, dont les « frontières » s'étendent au-delà du groupe, au sein de la séquence d'images sans avoir nécessité de signalisation supplémentaire.

Un tel procédé de décodage est notamment adapté à décoder un flux de données codé selon le procédé de codage décrit précédemment. Il pourra bien sûr comporter les différentes caractéristiques relatives au procédé de codage selon l'invention.

Selon un mode de réalisation de l'invention, le procédé de décodage est tel que, pour un groupe de blocs considéré :
- lorsque l'information de partitionnement est représentative d'un partitionnement vertical, le paramètre caractéristique associé à un bloc extérieur prend la valeur du paramètre caractéristique associé au bloc voisin situé directement à la gauche du bloc extérieur ;
- lorsque l'information de partitionnement est représentative d'un partitionnement horizontal, le paramètre caractéristique associé à un bloc extérieur prend la valeur
- du paramètre caractéristique associé au bloc voisin situé directement au-dessus du bloc extérieur ;
- lorsque l'information de partitionnement est représentative d'un partitionnement diagonal, le paramètre caractéristique associé à un bloc extérieur est égal à une combinaison des valeurs des paramètres caractéristiques associés aux blocs voisins situés à gauche, et/ou au-dessus, et/ou au-dessus-à-gauche du bloc extérieur selon la position de la ligne de partitionnement diagonal dans le groupe de blocs considéré.

De cette façon, suivant la nature de la « frontière » qu'elle soit verticale, horizontale ou diagonale, un bloc « extérieur » au sein du groupe hérite respectivement du paramètre caractéristique du bloc voisin précédemment décodé situé directement à gauche, au-dessus, ou au-dessus-à-gauche.

Un autre aspect de l'invention concerne un flux de données représentatif d'une séquence d'au moins une image, une image étant formée de blocs de pixels regroupés en groupes de taille standard.

Selon l'invention, un tel flux de données porte :
- une information de partitionnement d'au moins un groupe d'une image de la séquence, permettant d'identifier au sein du groupe des blocs dits extérieurs, un bloc extérieur n'appartenant à aucune grappe, une grappe étant formée de blocs du groupe présentant au moins un paramètre caractéristique similaire ;
- des informations de codage de grappe, obtenues pour au moins un groupe lors du codage des blocs d'au moins une grappe, au moins un paramètre caractéristique similaire associé à chacun des blocs d'une grappe étant codé(s) une seule fois pour la grappe ; et
- des informations de codage de bloc extérieur, obtenues pour au moins un groupe lors du codage de blocs extérieurs du groupe, au moins un paramètre caractéristique associé à chacun des blocs extérieurs n'étant pas codé(s).

Un tel flux de données peut notamment être émis par le procédé de codage décrit ci-dessus. Ce flux de données pourra bien sûr comporter les différentes caractéristiques relatives au procédé de codage selon l'invention.

Il est également décrit un dispositif de codage d'une séquence d'au moins une image, une image étant formée de blocs de pixels regroupés en groupes de taille standard.

Un tel dispositif de codage comprend les moyens suivants, activés pour au moins un groupe d'une image de la séquence :
- des moyens de détermination, pour chacun des blocs du groupe, d'au moins un paramètre caractéristique du bloc ;
- des moyens de formation d'au moins une grappe comprenant les blocs présentant au moins un paramètre caractéristique similaire, en fonction du résultat des moyens de détermination ;
- des moyens de codage des blocs de la ou des grappe(s), délivrant pour chaque grappe des informations de codage de grappe, le ou les paramètres caractéristiques similaires associés à chacun des blocs d'une grappe étant codé(s) une seule fois pour la grappe ;
- des moyens de codage des blocs du groupe n'appartenant à aucune grappe, dits blocs extérieurs, délivrant pour chaque bloc extérieur des informations de codage de bloc extérieur, le ou les paramètres caractéristiques similaires associés à chacun des blocs extérieurs n'étant pas codé(s) ;
et en ce que le dispositif comprend également :
- des moyens de génération d'un flux de données représentatif de la séquence, comprenant les informations de codage de grappe et les informations de codage de bloc extérieur, et
- des moyens d'insertion, dans le flux de données, d'au moins une information de partitionnement du ou des groupes, permettant d'identifier au sein d'un groupe le ou les blocs extérieurs.

Un tel dispositif de codage est notamment adapté à mettre en oeuvre le procédé de codage décrit précédemment. Il s'agit par exemple d'un codeur vidéo de type MPEG ou H.264 ou selon une future norme de codage.

Dans un autre mode de réalisation, l'invention concerne un dispositif de décodage d'un flux de données représentatif d'une séquence d'au moins une image, une image étant formée de blocs de pixels regroupés en groupes de taille standard.

Selon l'invention, un tel dispositif de décodage comprend les moyens suivants, activés pour au moins un groupe de blocs codés dans le flux de données :
- des moyens d'extraction d'au moins une information de partitionnement du groupe, présente dans le flux de données, permettant d'identifier au sein du groupe des blocs dits extérieurs, un bloc extérieur n'appartenant à aucune grappe, une grappe étant formée de blocs du groupe présentant au moins un paramètre caractéristique similaire ;
- des moyens de décodage des blocs d'au moins une grappe du groupe à partir d'informations de codage de grappe présentes dans le flux de données, comprenant :
   - des moyens de décodage d'un bloc de la grappe mettant en oeuvre un décodage du ou des paramètres caractéristiques codé(s) une seule fois pour la grappe ;
   - des moyens de décodage des autres blocs de la grappe tenant compte du ou des paramètres caractéristiques précédemment décodé(s) ;
- des moyens de décodage des blocs extérieurs à partir d'informations de codage de bloc extérieur présentes dans le flux de données, tenant compte d'au moins un paramètre caractéristique des blocs voisins précédemment décodés.

Un tel dispositif de décodage est notamment adapté à mettre en oeuvre le procédé de décodage décrit précédemment. Il s'agit par exemple d'un décodeur vidéo de type MPEG ou H.264, ou selon une future norme.

Un autre aspect de l'invention concerne au moins un programme d'ordinateur comportant des instructions pour la mise en oeuvre du procédé de codage tel que décrit précédemment, et/ou du procédé de décodage tel que décrits ci-dessus, lorsque le ou les programmes est(sont) exécuté(s) par un processeur.

On note en effet que le procédé de codage, comme le procédé de décodage, peuvent être mis en oeuvre de diverses manières, notamment sous forme câblée ou sous forme logicielle.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A et 1B présentent des groupes de blocs codés selon un mode de réalisation de l'invention en utilisant respectivement un partitionnement vertical et un partitionnement diagonal ;
- la figure 2 présente les principales étapes du procédé de codage;
- la figure 3 illustre les principales étapes du procédé de décodage selon un mode de réalisation particulier de l'invention ;
- la figure 4 décrit la structure d'un flux de données généré selon un mode de réalisation de l'invention ;
- la figure 5 présente le décodage d'un groupe de blocs utilisant un partitionnement horizontal ;
- les figures 6 et 7 présentent respectivement la structure d'un dispositif de codage et d'un dispositif de décodage selon un mode de réalisation particulier de l'invention.

### 5. Description d'un mode de réalisation de l'invention

### 5.1 Principe général

Le principe général de l'invention repose sur la construction de grappe(s) de blocs au sein d'au moins un groupe de blocs de taille standard. De telles grappes sont construites en regroupant les blocs présentant un paramètre caractéristique similaire au sein d'un même groupe. De cette façon, on « exclut » les blocs du groupe qui ne présentent pas de paramètre caractéristique similaire à ceux d'un autre bloc. Ces blocs du groupe, qui n'appartiennent donc à aucune grappe, sont appelés blocs extérieurs.

Ainsi, on appelle «groupe» selon l'invention un ensemble de blocs, de taille prédéfinie, carrée ou rectangulaire, comme 4x4 blocs, 8x8 blocs, 8x4 blocs, etc. Une grappe correspond à un sous-ensemble de blocs de ce groupe, comprenant les blocs présentant au moins un paramètre caractéristique similaire ou proche. Un groupe peut comprendre zéro, une, ou plusieurs grappes. Un même bloc peut appartenir à plusieurs grappes. Par exemple, on considère un premier bloc du groupe présentant un paramètre caractéristique de type vecteur mouvement égal à mv1 et un paramètre caractéristique de type résidu de prédiction égal à zéro, un deuxième bloc du même groupe présentant un paramètre caractéristique de type vecteur mouvement sensiblement égal à mv1, et un troisième bloc du même groupe présentant un paramètre caractéristique de type résidu de prédiction égal à zéro. Alors les premier et deuxième blocs forment une première grappe, associée au paramètre caractéristique de type vecteur mouvement égal à mv1, et les premier et troisième blocs forment une deuxième grappe, associée au paramètre caractéristique de type résidu de prédiction égal à zéro.

La technique selon l'invention permet aussi de générer un flux de données qui porte, entre autres, au moins une information de partitionnement définissant la « frontière » séparant les blocs d'un groupe appartenant à des grappes, des blocs extérieurs de ce même groupe. Le paramètre caractéristique associé aux blocs d'une même grappe n'est codé qu'une seule fois pour la grappe, et le paramètre caractéristique associé à chacun des blocs extérieurs n'est avantageusement pas codé, ce qui permet un gain de signalisation.

Finalement, côté décodage, cette information de partitionnement est utilisée pour identifier les blocs extérieurs d'un groupe. Le décodage d'un bloc extérieur ainsi identifié est notamment effectué en héritant du paramètre caractéristique d'un de ses blocs voisins précédemment décodé.

### 5.2 Description du procédé de codage

On décrit ci-après le fonctionnement du procédé de codage.

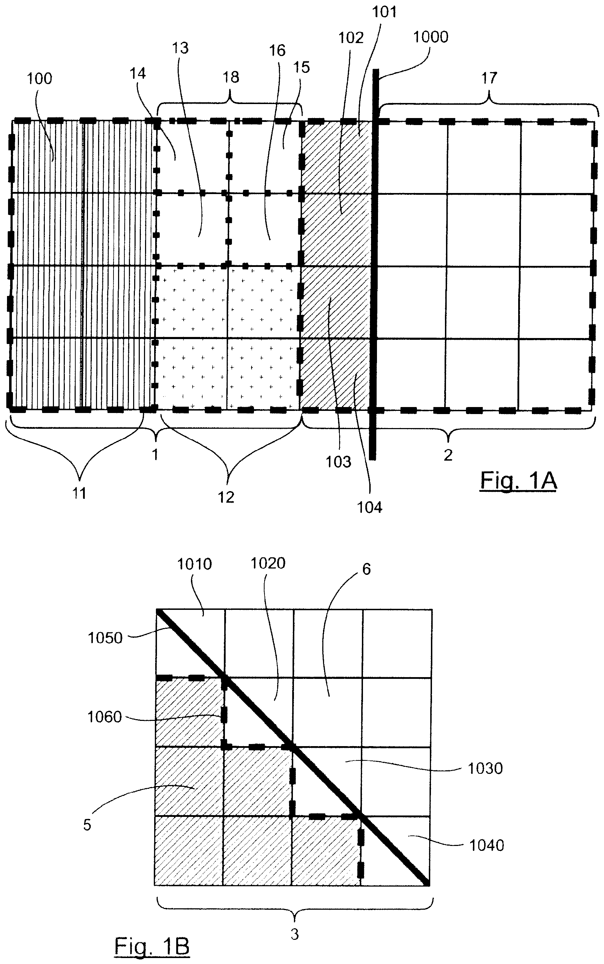

Plus précisément, les figures 1A et 1B illustrent des groupes de blocs que l'on cherche à coder, selon un mode de réalisation de l'invention.

Dans ce mode de réalisation, on se place dans le cas où les groupes sont définis de manière régulière dans chaque image de la séquence, et présentent une taille standard de 4x4 blocs de 8x8 pixels par exemple.

Pour au moins un groupe de blocs (référencé 1, 2 ou 3), on détermine pour chacun des seize blocs de ce groupe la valeur d'au moins un paramètre caractéristique de ce bloc (par exemple une valeur de direction de prédiction et/ou une valeur de vecteur mouvement associée à ce bloc).

En fonction de ces paramètres, on regroupe ensuite les blocs au sein d'un même groupe pour former des grappes. On rappelle qu'une grappe est formée des blocs d'un groupe présentant des paramètres caractéristiques similaires.

Par exemple, la figure 1A illustre deux groupes référencés 1 et 2.

Le groupe 1 de la figure 1A, situé à gauche sur la figure, permet de bien expliquer la notion de grappe. Suite à l'étape de détermination des paramètres caractéristiques associés à chaque bloc, les blocs du premier groupe 1 sont regroupés en trois grappes 11 (correspondant aux deux premières colonnes du premier groupe 1), 12 (correspondant aux deux dernières lignes et deux dernières colonnes du premier groupe 1) et 18 (correspondant aux deux premières lignes et deux dernières colonnes du premier groupe 1, c'est-à-dire aux blocs 13 à 16) . Par exemple, les blocs de la première grappe 11 portent chacun un vecteur mouvement sensiblement égal à mv6, les blocs de la deuxième grappe 12 portent chacun un vecteur mouvement sensiblement égal à mv4, les blocs de la troisième grappe 18 portent chacun un vecteur mouvement sensiblement égal à mv3. Les blocs de chaque grappe sont codés, délivrant pour chaque grappe des informations de codage de grappe. En revanche, le vecteur mouvement n'est codé qu'une fois pour chaque grappe. Ce paramètre caractéristique peut être codé avec les blocs, dans les informations de codage de grappe, ou « en dehors » des informations de codage de grappe.

Par exemple, le vecteur mouvement mv6 est codé une seule fois pour les huit blocs composant la première grappe 11, le vecteur mouvement mv4 est codé une seule fois pour les quatre bloc composant la deuxième grappe 12, et le vecteur mouvement mv3 est codé une seule fois pour les quatre blocs composant la troisième grappe 18. La valeur du paramètre caractéristique de la première grappe 11 correspond par exemple au vecteur mouvement du bloc 100. En d'autres termes, le paramètre caractéristique (vecteur de mouvement mv6) est codé pour le bloc 100, premier bloc de la grappe 11 selon un ordre de parcours prédéterminé du groupe, et n'est plus codé pour les autres blocs de la grappe. Selon une variante, si les vecteurs mouvement de certains blocs d'un groupe sont suffisamment proches, ce qui justifie leur regroupement en grappe, la valeur du paramètre caractéristique associé à la grappe peut être égale à une moyenne des vecteurs mouvements des blocs qui constituent la grappe.

On note que le groupe 1 ne comporte pas de bloc extérieur selon l'invention. Dans ce cas, il n'est pas nécessaire de transmettre d'information de partitionnement.

Le groupe 2 de la figure 1A permet d'illustrer le cas où un groupe comprend au moins une grappe et des blocs extérieurs. Plus précisément, suite à l'étape de détermination des paramètres caractéristiques associés à chaque bloc, certains blocs du deuxième groupe 2, situé à droite sur la figure, sont regroupés en une grappe 17, formée des trois dernières colonnes du groupe 2. Les autres blocs du groupe 2, formant la première colonne du groupe, correspondent à des blocs extérieurs, qui ne présentent pas de paramètres caractéristiques similaires à ceux des blocs de la grappe 17.

Comme illustré sur la figure 1A, le deuxième groupe 2 porte une « frontière », correspondant à un partitionnement vertical du deuxième groupe 2. Ce partitionnement permet d'identifier les blocs extérieurs 101, 102, 103 et 104 du deuxième groupe 2, situés à gauche de la ligne frontière 1000.

Selon l'invention, ces blocs 101 à 104 sont signalés comme blocs extérieurs grâce à une information de partitionnement du groupe 2, et leur paramètre caractéristique (leur vecteur de mouvement par exemple) n'est pas codé. Le « non-codage » de cette colonne de blocs extérieurs permet d'obtenir un gain efficace de codage.

Les blocs du deuxième groupe 2 situés à droite de la ligne frontière 1000 hériteront au décodage du paramètre caractéristique (vecteur mouvement mv2 par exemple) associé à la grappe 17. Les blocs extérieurs 101 à 104, situés à gauche de la ligne frontière 1000, hériteront au décodage du paramètre caractéristique associé à leur(s) bloc(s) voisin(s), précédemment codé(s)/décodé(s). Par exemple, comme décrit par la suite en relation avec le décodage, les blocs 101 à 104 hériteront des blocs voisins situés à gauche, par exemple le bloc 101 héritera du vecteur mouvement du bloc 15, le bloc 102 héritera du vecteur mouvement du bloc 16, etc.

Selon le schéma de codage utilisé, un résidu de prédiction sera calculé ou non pour chacun de ces blocs extérieurs, puis, le cas échéant, transmis dans le flux de données.

Pour signaler ce partitionnement du groupe au décodeur, une information de partitionnement est insérée et codée dans un flux de données représentatif de la séquence d'images. Par exemple, on peut coder un décalage vertical par rapport à l'origine du groupe de blocs pour indiquer la distance de la ligne de partitionnement à l'origine du groupe. Par exemple, sur la figure 1A, le décalage vertical est égal à un bloc par rapport à l'origine du deuxième groupe 2, c'est-à-dire par rapport au premier bloc (101) du deuxième groupe 2.

Au décodage, le décodeur pourra décoder l'information de partitionnement représentative de la frontière et en déduire une valeur du paramètre caractéristique « non-codé », comme décrit par la suite.

On signale ainsi dans le flux si un groupe porte une ou plusieurs grappes, ou aucune grappe. Si le groupe porte une grappe, tous les blocs de la grappe héritent au décodage de la valeur des paramètres portés par la grappe.

On obtient ainsi une signalisation des groupes à deux niveaux. Le premier niveau de signalisation est fixe et correspond au découpage de l'image en groupes de taille standard, au sein desquels il y peut y avoir formation de grappes. Le deuxième niveau permet de partitionner le groupe en grappes, pour l'adapter aux caractéristiques de l'image, et coder une seule fois par grappe un paramètre caractéristique similaire pour les différents blocs formant la grappe.

Cette signalisation de groupe à deux niveaux est moins coûteuse tout en restant adaptative.

L'exemple du deuxième groupe 2 de la figure 1A montre un partitionnement vertical de la grappe.

Bien entendu, d'autres partitionnement peuvent être envisagés, et notamment un partitionnement horizontal ou bien en diagonal du groupe.

Sur la figure 1B, on illustre un autre exemple de groupe, référencé 3. Le groupe 3, de la figure 1B, est partitionné selon un partitionnement diagonal. La ligne droite frontière 1050 de partitionnement du groupe 3, ou plus rigoureusement une ligne brisée 1060 représentée sur la figure 1B, délimite une grappe, référencée 6, par rapport à un ensemble de blocs extérieurs, référencés 5.

En effet, selon le mode de réalisation représenté, on considère des blocs ayant un paramètre caractéristique similaire appartenant à une même grappe 6, dont la frontière forme rigoureusement une ligne brisée 1060 ou encore en « escalier » au sein du groupe. L'information de partitionnement correspondante à cette ligne brisée 1060 sera codée sous la forme d'une ligne droite diagonale traversant les blocs formant « les marches d'escalier ». Ainsi les blocs 1010, 1020, 1030, 1040, appartenant à la grappe 6, se caractérisent chacun par une majorité de pixels situés du « côté » de la grappe 6 à droite de la ligne droite diagonale 1050.

Au décodage, le décodeur pourra décoder, par exemple pour le groupe 3 contenant la grappe 6, l'information de partitionnement représentative de la frontière diagonale et considérera qu'un bloc traversé par la ligne droite diagonale 1050 appartient à la grappe 6 si ce bloc présente une majorité de pixels situés du côté de la grappe 6 par rapport à la ligne droite diagonale 1050, ou est un bloc extérieur si ce bloc présente une majorité de pixels situés de l'autre côté de la grappe 6 par rapport à la ligne droite diagonale 1050.

Selon un autre mode de réalisation, on peut considérer une règle qui privilégie une formation de grappe de blocs, telle que les blocs extérieurs à cette grappe forment au moins une colonne et/ou au moins une ligne de blocs extérieurs. Ainsi le bloc 1010 et le bloc 1040 n'appartiennent pas à la grappe 6, et appartiennent à une colonne ou une ligne de blocs extérieurs. Les blocs 1020 et 1030 sont par ailleurs rattachés à la grappe 6. Une telle règle de partitionnement sera connue du décodeur.

Dans ce cas particulier, de partitionnement diagonal, on peut par exemple coder une information de partitionnement représentative d'un décalage vertical et un angle d'inclinaison par rapport à l'horizontale.

Selon un autre mode de réalisation particulier, non optimal au sens de l'invention, au moins un groupe de l'image à coder peut être codé selon une technique de l'art antérieur. Dans ce cas, au moins un groupe de l'image à coder est tel que le paramètre caractéristique associé à un bloc n'appartenant à aucune grappe de ce groupe est codé.

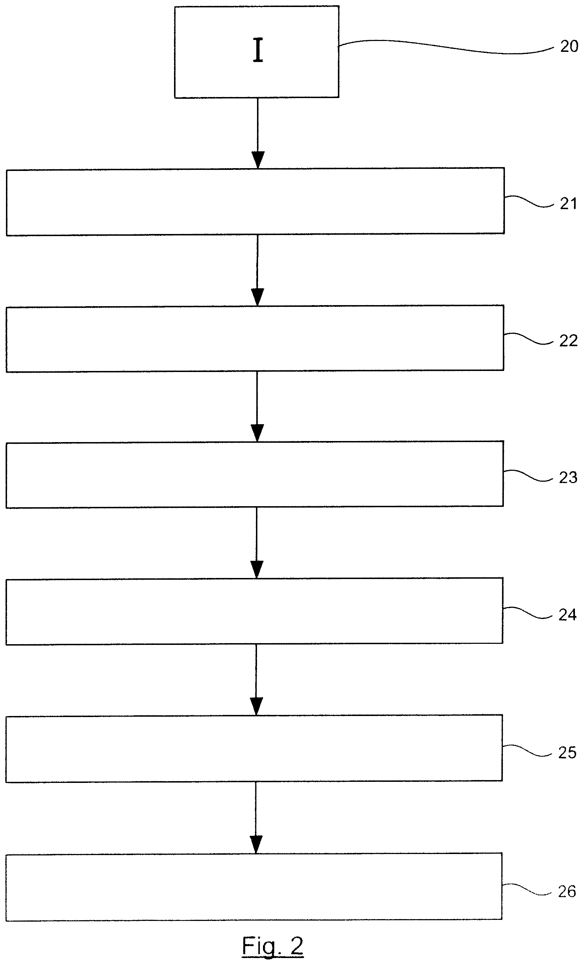

La figure 2 illustre plus précisément les différentes étapes mises en oeuvre lors du codage d'une séquence d'images, selon un mode de réalisation particulier de l'invention.

Plus précisément, on considère une image courante 20, prédécoupée en groupes de taille standard, par exemple des groupes de 4x4 blocs de 8x8 pixels, tels que représentés sur les figures 1A et 1B.

Le procédé de codage met en oeuvre les étapes suivantes, pour au moins un groupe de l'image courante 20, par exemple le deuxième groupe 2 illustré en figure 1A.

Tout d'abord, on détermine 21, pour chaque bloc de ce groupe 2 un paramètre caractéristique de ce bloc. Il s'agit par exemple d'un vecteur mouvement associé à ce bloc.

Puis, on procède à la formation 22 de grappes dans le groupe 2, en cherchant à regrouper les blocs présentant un paramètre caractéristique similaire. Par exemple, on regroupe les blocs présentant un vecteur mouvement sensiblement égal à mv2, et on obtient une unique grappe 17, illustrée en figure 1A. Les autres blocs du groupe 2, qui ne présentent pas de paramètre caractéristique similaire, sont des blocs extérieurs.

En reprenant le mode de réalisation tel que représenté en figure 1A par exemple, les blocs extérieurs 101 à 104 du groupe 2, n'appartenant pas à la grappe 17, sont codés 23, délivrant des informations de codage de blocs extérieurs. On note que selon l'invention, le paramètre caractéristique (par exemple vecteur de mouvement) associé à chacun de ces quatre blocs n'est pas codé.

On réalise ensuite le codage 24 des blocs de la grappe 17, délivrant des informations de codage de grappe. On note que selon l'invention, les douze blocs de la grappe 17 présentant un vecteur mouvement sensiblement égal à mv2, ce paramètre caractéristique n'est codé qu'une seule fois pour toute la grappe 17.

L'ordre de codage des grappes ou des blocs extérieurs d'un groupe peut changer selon l'ordre de parcours des blocs dans le groupe. Ainsi, si on rencontre d'abord des blocs extérieurs, on code ces blocs extérieurs, puis on code une grappe lorsqu'on rencontre un bloc appartenant à une grappe. Si on rencontre d'abord un bloc appartenant à une grappe, on code d'abord les blocs de la grappe, puis on passe au bloc non-codé suivant selon l'ordre de parcours des blocs. Si ce bloc appartient à une nouvelle grappe, on code tous les blocs appartenant à cette nouvelle grappe. Si ce bloc est un bloc extérieur, on code « individuellement » ce bloc, et ainsi de suite jusqu'à avoir parcouru l'ensemble des blocs du groupe.

On génère 25 alors un flux de données, portant au moins une structure de données représentative du deuxième groupe 2. Cette structure de données comprend des informations de codage de grappe, correspondant au codage de la grappe 17, et des informations de codage de blocs extérieurs à cette grappe, correspondant au codage des blocs 101 à 104, issues des précédentes étapes de codage 23 et 24.

Enfin le procédé insère 26 dans le flux, ou dans la structure de données associée au groupe 2, une information de partitionnement correspondant à la ligne frontière verticale 1000, permettant d'identifier les blocs extérieurs 101 à 104 au sein du groupe 2.

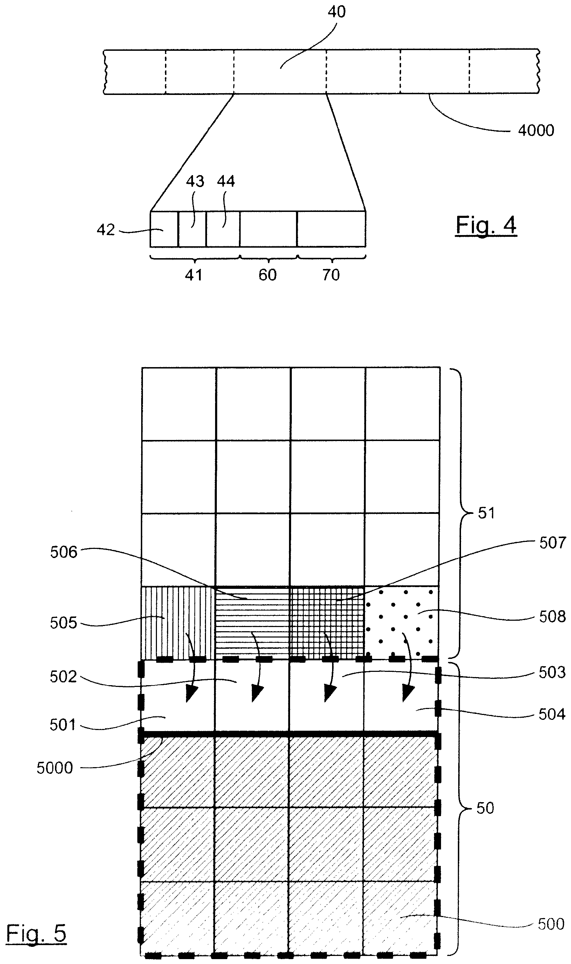

On présente en relation avec la figure 4, un exemple de flux de données 4000 obtenu lors de la mise en oeuvre du procédé de codage selon un mode de réalisation de l'invention.

Selon cet exemple, chaque groupe de blocs de pixels d'une image appartenant à une séquence d'images est codé dans le flux 4000 sous la forme d'une structure de données 40. Cette structure de données 40 représentative d'un groupe de blocs de pixels (par exemple le groupe 2 de la figure 1A) contient une information de partitionnement 41 comprenant un champ 42 indiquant la nature du partitionnement (vertical, horizontal, diagonal), un champ 43 indiquant le décalage permettant de situer la ligne frontière dans le groupe, un champ 44 indiquant l'inclinaison de la ligne frontière. En outre, cette structure de données contient également les informations de codage de blocs extérieurs 60 propres aux blocs extérieurs (par exemple les blocs 101 à 104 du groupe 2 de la figure 1A, ainsi que les informations de codage de grappe 70 relatives aux blocs appartenant à une ou plusieurs grappes d'un groupe (par exemple la grappe 17 du groupe 2 de la figure 1A). On rappelle que ces informations de codage de grappe 70 comprennent au moins paramètre caractéristique similaire associé à la grappe, codé une seule fois pour toute la grappe.

Dans le cas particulier où une grappe est associée à plusieurs paramètres caractéristiques, l'information de partitionnement insérée dans le flux de données est également représentative du nombre de paramètres caractéristiques codés pour la grappe. Par exemple, l'information de partitionnement d'un groupe de blocs indique une grappe construite sur la base de deux paramètres caractéristiques similaires : un vecteur mouvement et les indices des images utilisées pour la compensation en mouvement.

On rappelle que le partitionnement est codé une seule fois pour le groupe, sous la forme d'une information de partitionnement.

Par ailleurs, dans ce cas particulier, les informations de codage des blocs extérieurs à la grappe indiquent que certains blocs sont extérieurs du fait qu'ils n'ont pas le même vecteur mouvement et d'autres sont extérieurs du fait qu'ils n'ont pas les mêmes indices des images utilisées pour la compensation en mouvement.

En outre, dans ce cas particulier où la grappe est associée à plusieurs paramètres caractéristiques distincts, l'invention peut associer à chaque paramètre caractéristique une donnée de priorité pour spécifier au décodeur un ordre de décodage des données associées aux grappes.

### 5.3 Description de modes de réalisation du procédé de décodage

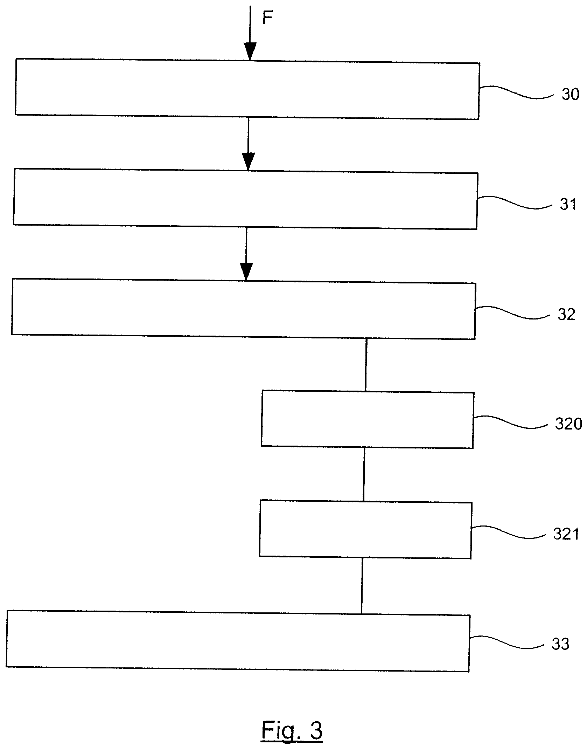

On présente en relation avec la figure 3 les principales étapes du procédé de décodage selon un mode de réalisation l'invention.

Tout d'abord, le décodeur reçoit 30 un flux F représentatif d'une séquence d'images, par exemple le flux 4000 décrit en relation avec la figure 4.

Pour au moins une structure de données représentative d'un groupe de blocs de pixels, le procédé met en oeuvre les étapes suivantes.

Il met en oeuvre une extraction 31 d'une information de partitionnement du groupe de bloc de pixels codé dans la structure de données. Cette étape d'extraction permet d'identifier au sein du groupe la présence d'une ou plusieurs grappe(s) et de blocs extérieurs n'appartenant à aucune grappe du groupe en cours de décodage. Pour des raisons de clarté, nous considérons ici le cas d'un groupe comprenant une seule grappe dans le groupe en cours de décodage. Bien entendu, l'Homme du Métier étendra facilement cet enseignement à un groupe présentant plusieurs grappes dans un même groupe.

Le décodeur parvient ainsi à retracer la ligne frontière du groupe, séparant grappes et blocs extérieurs, par lecture de l'information de partitionnement. Comme décrit en relation avec la figure 4, cette information de partitionnement 41 comprend par exemple une information de nature, de décalage et d'inclinaison de la ligne frontière.

Puis le décodeur procède au décodage 32 des blocs de la grappe du groupe. Ce décodage comprend deux sous-étapes 320 et 321 :
- la première sous-étape 320 permet de décoder, pour un bloc de la grappe (par exemple le premier selon un ordre de parcours prédéterminé de décodage), le paramètre caractéristique de la grappe. On rappelle que ce paramètre caractéristique a été codé une seule fois pour l'ensemble de la grappe ;
- la deuxième sous-étape de décodage 321 permet de décoder les autres blocs de la grappe, en tenant compte du paramètre caractéristique précédemment décodé. En d'autres termes, les autres blocs de la grappe héritent.

Enfin, le décodeur procède au décodage 33 des blocs extérieurs à la grappe, en tenant compte d'au moins un paramètre caractéristique des blocs voisins précédemment décodés.

En particulier, ce décodage prend en compte la ligne frontière qui peut être par exemple verticale, horizontale ou diagonale. Ainsi, selon un mode de réalisation de l'invention :
- lorsque l'information de partitionnement est représentative d'un partitionnement vertical, le paramètre caractéristique associé à un bloc extérieur prend la valeur du paramètre caractéristique associé au bloc voisin situé directement à la gauche du bloc extérieur ;
- lorsque l'information de partitionnement est représentative d'un partitionnement horizontal, le paramètre caractéristique associé à un bloc extérieur prend la valeur du paramètre caractéristique associé au bloc voisin situé directement au-dessus du bloc extérieur ;
- lorsque l'information de partitionnement est représentative d'un partitionnement diagonal, le paramètre caractéristique associé à un bloc extérieur est égal à une combinaison des valeurs des paramètres caractéristiques associés aux blocs voisins situés à gauche, et/ou au-dessus, et/ou au-dessus-à-gauche du bloc extérieur.

On présente, en relation avec la figure 5, un autre exemple du décodage des blocs extérieur d'un groupe de blocs, partitionné selon un partitionnement horizontal 5000. La figure 5 présente deux groupes 51 et 50, le groupe 51 ayant été auparavant décodé. La ligne frontière horizontale 5000 indique un partitionnement horizontal du groupe de blocs 50. Cette frontière sépare en effet, une grappe 500, dont le paramètre caractéristique est un vecteur de mouvement mv7, des blocs extérieurs 501 à 504.

Selon un mode de réalisation de l'invention, le décodeur attribue au bloc extérieur 501, un vecteur mouvement mv8 associé au bloc voisin 505 du groupe 51, situé au-dessus du bloc 501 du groupe 50. De manière identique, il attribue respectivement aux blocs 502, 503, 504 les vecteurs mouvement mv9, mv10, mv11 des blocs 506, 507, 508 situés au-dessus de ces blocs.

Selon le schéma de codage utilisé, le décodeur réalise une compensation de mouvement à l'aide du vecteur de mouvement attribué au bloc extérieur et vient ajouter aux valeurs prédites pour le bloc extérieur un éventuel résidu de prédiction reçu dans le flux de données.

Selon une variante, on affecte au bloc extérieur 502 par exemple une combinaison linéraire (par exemple une moyenne) des vecteurs mouvement des blocs 505, 506 et 507, situés au-dessus-à-gauche, au-dessus, et au-dessus-à-droite du bloc extérieur 502

Il est ainsi possible de former de nouvelles grappes, d'étendre des grappes de groupes précédemment décodés. Par exemple, les blocs 505 et 501 forment une nouvelle grappe présentant comme paramètre caractéristique le vecteur mouvement mv8.

Dans le cas particulier où une grappe est associée à plusieurs paramètres caractéristiques, l'étape d'extraction décrite précédemment permet en outre d'identifier les différents paramètres caractéristiques associés à ladite grappe. Puis, le procédé de décodage selon l'invention réitère alors les étapes de décodage des blocs de la grappe et de décodage des blocs extérieurs à la grappe pour chacun des paramètres caractéristiques identifiés.

Par ailleurs, dans le cas particulier d'une information de partitionnement représentative d'un partitionnement diagonal, le décodeur pourra décoder, par exemple pour un groupe contenant une unique grappe, l'information de partitionnement représentative de la frontière diagonale et attribuer un bloc traversé par la ligne diagonale à une grappe si celui-ci présente une majorité de pixels situés du côté de la grappe par rapport à la ligne frontière diagonale.

### 5.4 Structure des dispositifs de codage et de décodage

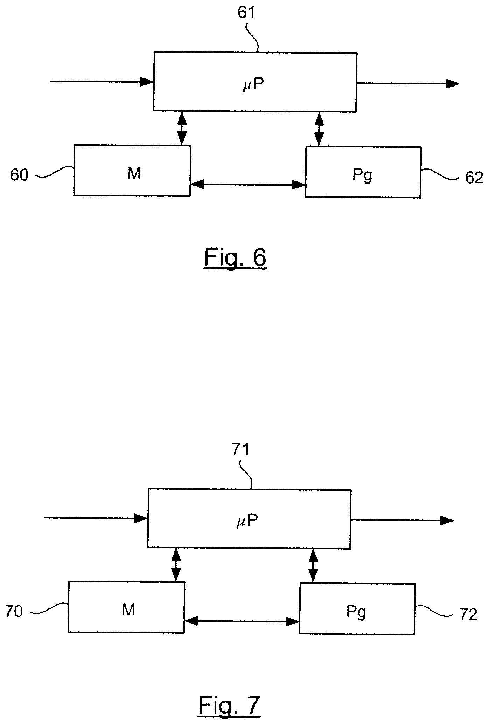

On présente finalement, en relation avec les figures 6 et 7, la structure simplifiée d'un dispositif de codage et d'un dispositif de décodage selon les modes de réalisation décrits ci-dessus.

Comme illustré en figure 6, un tel dispositif de codage comprend une mémoire 61 comprenant une mémoire tampon, une unité de traitement 62, équipée par exemple d'un microprocesseur *µ*P, et pilotée par le programme d'ordinateur 63, mettant en oeuvre le procédé de codage selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée une séquence d'au moins une image. Le microprocesseur de l'unité de traitement 62 met en oeuvre les étapes du procédé de codage décrit précédemment, selon les instructions du programme d'ordinateur 63, pour coder la séquence d'images. Pour cela, le dispositif de codage comprend, outre la mémoire tampon 61, des moyens de détermination, pour chacun des blocs d'au moins un groupe d'une image, d'au moins un paramètre caractéristique du bloc, des moyens de formation d'au moins une grappe comprenant les blocs présentant au moins un paramètre caractéristique similaire, des moyens de codage des blocs de la ou des grappe(s), des moyens de codage des blocs du groupe extérieurs n'appartenant à aucune grappe, des moyens de génération d'un flux de données représentatif de la séquence, et des moyens d'insertion dans le flux de données d'au moins une information de partitionnement du ou des groupes. Ces moyens sont pilotés par le microprocesseur de l'unité de traitement 62. L'unité de traitement 62 transmet donc, à destination d'au moins un dispositif de décodage, un flux de données représentatif de la séquence d'images, comprenant des informations de partitionnement, de codage de grappe, et de codage de blocs extérieurs.

Comme illustré en figure 7, un tel dispositif de décodage comprend quant à lui une mémoire 71 comprenant une mémoire tampon, une unité de traitement 72, équipée par exemple d'un microprocesseur *µ*P, et pilotée par le programme d'ordinateur 73, mettant en oeuvre le procédé de décodage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un flux de données représentatif de la séquence d'images, comprenant des informations de partitionnement, de codage de grappe, et de codage de blocs extérieurs. Le microprocesseur de l'unité de traitement 72 met en oeuvre les étapes du procédé de décodage décrit précédemment, selon les instructions du programme d'ordinateur 73, pour décoder les blocs codés. Pour cela, le dispositif de décodage comprend, outre la mémoire tampon 71, des moyens d'extraction d'au moins une information de partitionnement du groupe, des moyens de décodage des blocs d'au moins une grappe du groupe à partir d'informations de codage de grappe présentes dans le flux de données, et des moyens de décodage des blocs extérieurs à partir d'informations de codage de bloc extérieur présentes dans le flux de données. Ces moyens sont pilotés par le microprocesseur de l'unité de traitement 72.

## Revendications

1. Procédé de décodage d'un flux de données (4000) représentatif d'au moins une image ou d'une séquence d'au moins une image, une image (20) étant formée de blocs de pixels regroupés en groupes de taille prédéfinie (1), ledit procédé mettant en oeuvre les étapes suivantes, pour au moins un groupe (1) de blocs codés dans ledit flux de données (F, 4000) :
- extraction (31) d'au moins une information de partitionnement (41) dudit groupe (1), présente dans ledit flux de données (4000), définissant une frontière au sein dudit groupe séparant dans ledit groupe de blocs, des blocs dits extérieurs (101), de blocs formant au moins une grappe (11), une grappe (11) étant formée de blocs dudit groupe présentant au moins un paramètre caractéristique similaire, un bloc extérieur n'appartenant à aucune grappe dudit groupe, ledit paramètre caractéristique appartenant au groupe comprenant :
- une valeur de type de codage de prédiction ;
- une valeur de vecteur mouvement ;
- une valeur de résidu de prédiction nulle ;
- une valeur de type de transformation ;
- une valeur de coefficient de compensation d'illumination ;
- une valeur de coefficient de pondération de différentes prédictions ;
- décodage (32) des blocs formant au moins une grappe (11) dudit groupe à partir d'informations de codage (70) de grappe présentes dans ledit flux de données (4000), comprenant :
- une étape de décodage (320) d'un bloc de ladite grappe (11) mettant en oeuvre un décodage du ou desdits paramètres caractéristiques codé(s) une seule fois pour ladite grappe ;
- une étape de décodage (321) des autres blocs de ladite grappe (11) tenant compte du ou desdits paramètres caractéristiques précédemment décodé(s) ;
- décodage (33) des blocs extérieurs à partir d'informations de codage de bloc(s) extérieur(s) (101) présentes dans ledit flux de données (4000), tenant compte d'au moins un paramètre caractéristique des blocs voisins précédemment décodés.

2. Procédé de décodage selon la revendication 1, **caractérisé en ce que** :
- lorsque ladite information de partitionnement (41) est représentative d'un partitionnement vertical (1001), le paramètre caractéristique associé à un bloc extérieur (101) prend la valeur du paramètre caractéristique associé au bloc voisin situé directement à la gauche dudit bloc extérieur ;
- lorsque ladite information de partitionnement (41) est représentative d'un partitionnement horizontal (5000), le paramètre caractéristique associé à un bloc extérieur (101) prend la valeur du paramètre caractéristique associé au bloc voisin situé directement au-dessus dudit bloc extérieur ;
- lorsque ladite information de partitionnement est représentative d'un partitionnement diagonal (1050), le paramètre caractéristique associé à un bloc extérieur (101) est égal à une combinaison des valeurs des paramètres caractéristiques associés aux blocs voisins situés à gauche et/ou au-dessus et/ou au-dessus-à-gauche dudit bloc extérieur, selon la position, dans ledit groupe, d'une ligne de partitionnement diagonale définie par ladite information de partitionnement.

3. Dispositif de décodage d'un flux de données représentatif d'au moins une image ou d'une séquence d'au moins une image, une image étant formée de blocs de pixels regroupés en groupes de taille prédéfinie, ledit dispositif comprenant les moyens suivants, activés pour au moins un groupe de blocs codés dans ledit flux de données :
- des moyens d'extraction d'au moins une information de partitionnement dudit groupe, présente dans ledit flux de données, définissant une frontière au sein dudit groupe séparant dans ledit groupe de blocs, des blocs dits extérieurs, de blocs formant au moins une grappe, une grappe étant formée de blocs dudit groupe présentant au moins un paramètre caractéristique similaire, un bloc extérieur n'appartenant à aucune grappe, ledit paramètre caractéristique appartenant au groupe comprenant :
- une valeur de type de codage de prédiction ;
- une valeur de vecteur mouvement ;
- une valeur de résidu de prédiction nulle ;
- une valeur de type de transformation ;
- une valeur de coefficient de compensation d'illumination ;
- une valeur de coefficient de pondération de différentes prédictions ;
- des moyens de décodage des blocs formant au moins une grappe dudit groupe à partir d'informations de codage de grappe présentes dans ledit flux de données, comprenant :
- des moyens de décodage d'un bloc de ladite grappe mettant en oeuvre un décodage du ou desdits paramètres caractéristiques codé(s) une seule fois pour ladite grappe ;
- des moyens de décodage des autres blocs de ladite grappe tenant compte du ou desdits paramètres caractéristiques précédemment décodé(s) ;
- des moyens de décodage des blocs extérieurs à partir d'informations de codage de bloc(s) extérieur(s) présentes dans ledit flux de données, tenant compte d'au moins un paramètre caractéristique des blocs voisins précédemment décodés.

4. Programme d'ordinateur comportant des instructions pour la mise en oeuvre du procédé selon l'une quelconque des revendications 1 à 2, lorsqu'il est exécuté par un processeur.

## Patentansprüche

1. Verfahren zur Decodierung eines Datenstroms (4000), der für mindestens ein Bild oder eine Sequenz mindestens eines Bildes repräsentativ ist, wobei ein Bild (20) von Pixelblöcken gebildet ist, die zu Gruppen von vordefinierter Größe (1) zusammengefasst sind,
wobei das Verfahren die folgenden Schritte für mindestens eine Gruppe (1) von codierten Blöcken in dem Datenstrom (F, 4000) einsetzt:
- Entnahme (31) mindestens einer Information zur Aufteilung (41) der Gruppe (1), die in dem Datenstrom (4000) vorhanden ist, die eine Grenze innerhalb der Gruppe definiert, die in der Gruppe von Blöcken so genannte äußere Blöcke (101) von Blöcken trennt, die mindestens ein Cluster (11) bilden, wobei ein Cluster (11) von Blöcken der Gruppe gebildet ist, die mindestens einen ähnlichen charakteristischen Parameter aufweisen, wobei ein äußerer Block zu keinem Cluster der Gruppe gehört, wobei der charakteristische Parameter der Gruppe angehört, umfassend:
- einen Wert vom Typ Vorhersagecodierung;
- einen Wert eines Bewegungsvektors;
- einen Restwert einer Nullvorhersage;
- einen Wert vom Typ Umwandlung;
- einen Wert eines Gewichtungskoeffizienten eines Illuminationsausgleichs;
- einen Wert eines Gewichtungskoeffizienten verschiedener Vorhersagen;
- Decodierung (32) der Blöcke, die mindestens ein Cluster (11) der Gruppe bilden, aus Cluster-Codierungsinformationen (70), die in dem Datenstrom (4000) vorhanden sind, umfassend:
- einen Schritt der Decodierung (320) eines Blocks des Clusters (11), der eine Decodierung des oder der einmal für das Cluster codierten charakteristischen Parameter(s) einsetzt;
- einen Schritt der Decodierung (321) der anderen Blöcke des Clusters (11), der den oder die vorher decodierten charakteristischen Parameter berücksichtigt;
- Decodierung (33) der äußeren Blöcke aus Codierungsinformationen von (eines) äußeren Blöcken (Blocks) (101), die in dem Datenstrom (4000) vorhanden sind, unter Berücksichtigung mindestens eines charakteristischen Parameters der vorher decodierten Blöcke.

2. Decodierungsverfahren nach Anspruch 1, **dadurch gekennzeichnet, dass**:
- wenn die Information zur Aufteilung (41) für eine vertikale Aufteilung (1001) repräsentativ ist, der einem äußeren Block (101) zugeordnete charakteristische Parameter den Wert des charakteristischen Parameters annimmt, der dem benachbarten Block, der sich direkt links vom äußeren Block befindet, zugeordnet ist;
- wenn die Information zur Aufteilung (41) für eine horizontale Aufteilung (5000) repräsentativ ist, der einem äußeren Block (101) zugeordnete charakteristische Parameter den Wert des charakteristischen Parameters annimmt, der dem benachbarten Block, der sich direkt über dem äußeren Block befindet, zugeordnet ist;
- wenn die Information zur Aufteilung für eine diagonale Aufteilung (1050) repräsentativ ist, der einem äußeren Block (101) zugeordnete charakteristische Parameter gleich einer Kombination der Werte der charakteristischen Parameter ist, die den benachbarten Blöcken zugeordnet sind, die sich links und/oder über und/oder links über dem äußeren Block befinden, je nach Position einer diagonalen Aufteilungslinie, die durch die Aufteilungsinformation definiert ist, in der Gruppe.

3. Vorrichtung zur Decodierung eines Datenstroms, der für mindestens ein Bild oder eine Sequenz mindestens eines Bildes repräsentativ ist,
wobei ein Bild von Pixelblöcken gebildet ist, die zu Gruppen von vordefinierter Größe zusammengefasst sind,
wobei die Vorrichtung die folgenden Mittel umfasst, die für mindestens eine Gruppe von codierten Blöcken in dem Datenstrom aktiviert werden:
- Mittel zur Entnahme mindestens einer Information zur Aufteilung der Gruppe, die in dem Datenstrom vorhanden ist, die eine Grenze innerhalb der Gruppe definiert, die in der Gruppe von Blöcken so genannte äußere Blöcke von Blöcken trennt, die mindestens ein Cluster bilden, wobei ein Cluster von Blöcken der Gruppe gebildet ist, die mindestens einen ähnlichen charakteristischen Parameter aufweisen, wobei ein äußerer Block zu keinem Cluster gehört, wobei der charakteristische Parameter der Gruppe angehört, umfassend:
- einen Wert vom Typ Vorhersagecodierung;
- einen Wert eines Bewegungsvektors;
- einen Restwert einer Nullvorhersage;
- einen Wert vom Typ Umwandlung;
- einen Wert eines Gewichtungskoeffizienten eines Illuminationsausgleichs;
- einen Wert eines Gewichtungskoeffizienten verschiedener Vorhersagen;
wobei die Mittel zur Decodierung der Blöcke, die mindestens ein Cluster der Gruppe bilden, aus Cluster-Codierungsinformationen, die in dem Datenstrom enthalten sind, umfassen:
- Mittel zur Decodierung eines Blocks des Clusters, die eine Decodierung des oder der einmal für das Cluster codierten charakteristischen Parameter(s) einsetzen
- Mittel zur Decodierung der anderen Blöcke des Clusters, die den oder die vorher decodierten charakteristischen Parameter berücksichtigt;
- Mittel zur Decodierung der äußeren Blöcke aus Codierungsinformationen von (eines) äußeren Blöcken (Blocks), die in dem Datenstrom vorhanden sind, unter Berücksichtigung mindestens eines charakteristischen Parameters der vorher decodierten Blöcke.

4. Computerprogramm, umfassend Anweisungen für den Einsatz des Verfahrens nach einem der Ansprüche 1 bis 2, wenn es von einem Prozessor ausgeführt wird.

## Claims

1. Method for decoding a data stream (4000) that is representative of at least one image or a sequence of at least one image,
an image (20) being formed from blocks of pixels grouped into groups (1) of predefined size,
said method implementing the following steps, for at least one group (1) of coded blocks in said data stream (F, 4000) :
- extracting (31) at least one item of information (41) on partitioning of said group (1), said item of information being present in said data stream (4000) and defining a border, within said group, separating, in said group of blocks, what are called exterior blocks (101) from blocks forming at least one cluster (11), a cluster (11) being formed of blocks of said group having at least one similar characteristic parameter, an exterior block belonging to no cluster of said group, said characteristic parameter belonging to the group comprising:
- a value of type of predictive coding;
- a movement vector value;
- a zero prediction residue value;
- a value of type of transform;
- an illumination compensation coefficient value; and
- a value of a coefficient of weighting of various predictions;
- decoding (32) the blocks forming at least one cluster (11) of said group on the basis of cluster coding information (70) present in said data stream (4000), this comprising:
- a step (320) of decoding a block of said cluster(11), implementing a decoding of said characteristic parameter or parameters encoded only once for said cluster; and
- a step (321) of decoding the other blocks of said cluster (11), taking into account said previously decoded characteristic parameter or parameters; and
- decoding (33) the exterior blocks on the basis of exterior block coding information (101) present in said data stream (4000), taking into account at least one characteristic parameter of the previously decoded neighbouring blocks.

2. Decoding method according to Claim 1, **characterized in that**:
- when said item of partition information (41) is representative of a vertical partitioning (1001), the characteristic parameter that is associated with an exterior block (101) takes the value of the characteristic parameter associated with the neighbouring block located directly to the left of said exterior block;
- when said item of partition information (41) is representative of a horizontal partitioning (5000), the characteristic parameter associated with an exterior block (101) takes the value of the characteristic parameter associated with the neighbouring block located directly above said exterior block;
- when said item of partition information is representative of a diagonal partitioning (1050), the characteristic parameter associated with an exterior block (101) is equal to a combination of the values of the characteristic parameters associated with the neighbouring blocks located to the left and/or above and/or above and to the left of said exterior block, depending on the position, in said group, of a diagonal partition line defined by said item of partition information.

3. Device for decoding a data stream representative of at least one image or of a sequence of at least one image,
an image being formed from blocks of pixels grouped into groups of predefined size,
said device comprising the following means, which are activated for at least one group of coded blocks in said data stream:
- means for extracting at least one item of information on partitioning of said group, said item of information being present in said data stream and defining a border, within said group, separating, in said group of blocks, what are called exterior blocks from blocks forming at least one cluster, a cluster being formed of blocks of said group having at least one similar characteristic parameter, an exterior block belonging to no cluster, said characteristic parameter belonging to the group comprising:
- a value of type of predictive coding;
- a movement vector value;
- a zero prediction residue value;
- a value of type of transform;
- an illumination compensation coefficient value; and
- a value of a coefficient of weighting of various predictions;
- means for decoding the blocks forming at least one cluster of said group on the basis of cluster coding information present in said data stream, this comprising:
- means for decoding a block of said cluster, implementing a decoding of said characteristic parameter or parameters encoded only once for said cluster; and
- means for decoding the other blocks of said cluster, taking into account said previously decoded characteristic parameter or parameters; and
- means for decoding the exterior blocks on the basis of exterior block coding information present in said data stream, taking into account at least one characteristic parameter of the previously decoded neighbouring blocks.

4. Computer program including instructions for implementing the method according to one of Claims 1 to 2, when it is executed by a processor.
